# EUROPEAN PATENT APPLICATION

(11) **EP 4 748 689 A1**
(43) Date of publication of application: **27.05.2026**
(21) Application number: 24842790.8
(22) Date of filing: 24.04.2024
(51) Int. Cl.: B62D 25/20, B21D 22/20, B21D 22/26, B21D 24/00

(54) **ROCKER OUTER, DOOR RING STRUCTURE AND METHOD FOR MANUFACTURING DOOR RING STRUCTURE**

(30) Priority: 19.07.2023 JP 2023117552
(71) Applicant: Nippon Steel Corporation, Tokyo 100-8071 (JP)
(72) Inventor: IKEGAMI, Kenta, Tokyo 100-8071 (JP); KUBO, Masahiro, Tokyo 100-8071 (JP); YOSHIDA, Hiroshi, Tokyo 100-8071 (JP); SAITO, Masahiro, Tokyo 100-8071 (JP); ITO, Yasuhiro, Tokyo 100-8071 (JP); TANOUE, Hiroyuki, Tokyo 100-8071 (JP); SUZUKI, Junichiro, Tokyo 100-8071 (JP); YUASA, Susumu, Tokyo 100-8071 (JP); MIKAZUKI, Yutaka, Tokyo 100-8071 (JP)
(74) Representative: Zimmermann & Partner Patentanwälte mbB
(86) International application number: PCT/JP2024/016097
(87) International publication number: WO 2025/017990

(57) **Abstract**

A rocker outer (30, 30A, 30B) includes a top plate (31), ridge line portions (32, 33), vertical walls (34, 35), and flanges (36, 37). At least one of the vertical walls (34, 35) includes at least one bead (381). The at least one bead (381) extends in the longitudinal direction of the rocker outer (30, 30A, 30B). In a transverse cross-section of the rocker outer (30, 30A, 30B), the at least one bead (381) protrudes from a reference line (R1) inward or outward of the rocker outer (30, 30A, 30B), the reference line (R1) being a straight line connecting an end portion on the top plate (31) side of the at least one of the vertical walls (34, 35) and an end portion on the flange (36, 37) side of the at least one of the vertical walls (34, 35). The sum of the depth of the at least one bead (381) with respect to the reference line (R1) is 4.0 times or more the sheet thickness of the top plate (31).

## Description

### TECHNICAL FIELD

The present disclosure relates to a rocker outer for an automobile. Also, the present disclosure relates to a door ring structure for an automobile and a method for producing the same.

### BACKGROUND ART

A vehicle body of an automobile includes a plurality of frame members. Examples of the frame members include a bumper beam, A-pillars (front pillars), B-pillars (center pillars), C-pillars (rear pillars), side members, and rockers (side sills).

For example, Patent Literature 1 discloses a body side structural frame constituting a door opening of a vehicle body of an automobile. This body side structural frame includes, for example, an A-pillar section (A-pillar upper outer), a hinge pillar section (A-pillar lower outer), a B-pillar section (B-pillar outer), and a rocker outer. Patent Literature 1 states that the body side structural frame is produced by press-forming a composite blank, which is formed of a plurality of joined blanks.

### CITATION LIST

### PATENT LITERATURE

Patent Literature 1: JP 2021-528248A

### SUMMARY OF INVENTION

### TECHNICAL PROBLEM

In recent years, high-strength materials are frequently used for automobile frame members in order to ensure high collision resistance performance. The frame members are formed of a steel material having, for example, a tensile strength of 980 MPa or more. However, the ductility of steel material decreases as its strength increases. Thus, the higher the strength of the steel material forming the frame members, the more likely they are to break in the event of an automobile collision.

For example, in the body side structural frame of Patent Literature 1, the rocker outer is subjected to a load applied from the side of the vehicle body when the automobile undergoes a side collision. This deforms the rocker outer, and tensile strain is concentrated on a portion of the rocker outer. In the case where the rocker outer is formed of a high-strength material with low ductility, it is prone to breakage at a portion where strain is concentrated. If the rocker outer breaks, the energy absorption performance of the rocker outer will be significantly reduced, and the benefits of the high-strength material cannot be utilized.

An object of the present disclosure is to provide a rocker outer that is less likely to break in the event of an automobile collision.

### SOLUTION TO PROBLEM

A rocker outer for an automobile according to the present disclosure includes: a top plate; two vertical walls disposed on respective sides of the top plate and connected to the top plate via respective ridge line portions; and flanges respectively connected to the two vertical walls, on a side opposite to the top plate side. The rocker outer is formed of a steel sheet having a tensile strength of 980 MPa or more. At least one of the two vertical walls includes at least one first bead. The at least one first bead extends in a longitudinal direction of the rocker outer. In a transverse cross-section of the rocker outer, the at least one first bead protrudes from a reference line inward or outward of the rocker outer, the reference line being a straight line connecting an end portion, on the top plate side, of the at least one of the two vertical walls and an end portion, on the flange side, of the at least one of the two vertical walls. A sum of a depth of the at least one first bead with respect to the reference line is 4.0 times or more a sheet thickness of the top plate.

### ADVANTAGEOUS EFFECTS OF INVENTION

According to the present disclosure, it is possible to make the rocker outer less likely to break in the event of an automobile collision.

### BRIEF DESCRIPTION OF DRAWINGS

[FIG. 1] FIG. 1 is a side view of a door ring structure according to a first embodiment.
[FIG. 2A] FIG. 2A is a cross-sectional view of a rocker outer included in the door ring structure shown in FIG. 1, taken along line II-II.
[FIG. 2B] FIG. 2B is a partial enlarged view of the rocker outer shown in FIG. 2A.
[FIG. 3A] FIG. 3A is a schematic view for illustrating a method for producing the door ring structure according to the first embodiment.
[FIG. 3B] FIG. 3B is a schematic view for illustrating the method for producing the door ring structure according to the first embodiment.
[FIG. 3C] FIG. 3C is a schematic view for illustrating the method for producing the door ring structure according to the first embodiment.
[FIG. 3D] FIG. 3D is a schematic view for illustrating the method for producing the door ring structure according to the first embodiment.
[FIG. 3E] FIG. 3E is a schematic view for illustrating the method for producing the door ring structure according to the first embodiment.
[FIG. 4] FIG. 4 is a transverse cross-sectional view of a rocker outer according to a second embodiment.
[FIG. 5] FIG. 5 is a transverse cross-sectional view of a rocker outer according to a third embodiment.
[FIG. 6A] FIG. 6A is a schematic view for illustrating a production method different from the method for producing the door ring structure according to the first embodiment.
[FIG. 6B] FIG. 6B is a schematic view for illustrating the production method different from the method for producing the door ring structure according to the first embodiment.
[FIG. 6C] FIG. 6C is a schematic view for illustrating the production method different from the method for producing the door ring structure according to the first embodiment.
[FIG. 7] FIG. 7 is a transverse cross-sectional view of a rocker outer according to a variation of the above embodiments.
[FIG. 8] FIG. 8 is a transverse cross-sectional view of a rocker outer according to another variation of the above embodiments.
[FIG. 9] FIG. 9 is a side view of a door ring structure according to a variation of the above embodiments.

### DESCRIPTION OF EMBODIMENTS

A rocker outer for an automobile according to an embodiment includes: a top plate; two vertical walls disposed on respective sides of the top plate and connected to the top plate via respective ridge line portions; and flanges respectively connected to the two vertical walls, on a side opposite to the top plate side. The rocker outer is formed of a steel sheet having a tensile strength of 980 MPa or more. At least one of the two vertical walls includes at least one first bead. The at least one first bead extends in a longitudinal direction of the rocker outer. In a transverse cross-section of the rocker outer, the at least one first bead protrudes from a reference line inward or outward of the rocker outer, the reference line being a straight line connecting an end portion, on the top plate side, of the at least one of the two vertical walls and an end portion, on the flange side, of the at least one of the two vertical walls. A sum of a depth of the at least one first bead with respect to the reference line is 4.0 times or more a sheet thickness of the top plate (first configuration).

When a rocker outer is fitted to a vehicle body of an automobile, the top plate of the rocker outer is disposed outward in the left-right direction of the body relative to the two vertical walls, and one of the vertical walls is positioned below the other vertical wall. The rocker outer is deformed when, for example, a pole-like colliding object collides with the vehicle body of the automobile from the side. The deformation generates tensile stress in a portion of the rocker outer, and concentrates strain on this portion. In view of this, at least one of the vertical walls has at least one first bead in the rocker outer according to the first configuration. The first bead has a sufficient depth, unlike commonly used beads provided in frame members of automobiles for the purpose of improving the rigidity. Specifically, the sum of the depth of the at least one first bead is 4.0 times or more the sheet thickness of the top plate. This ensures the cross-sectional line length of the rocker outer. Thus, when the rocker outer is deformed by a side collision with a pole, for example, the strain is easily dispersed in the deformed portion and the vicinity thereof. As a result, even when the rocker outer is formed of a high-strength material having a tensile strength of 980 MPa or more, it is possible to make the rocker outer unlikely to break in the event of an automobile collision.

In the rocker outer according to the first configuration, each of the two vertical walls may include the at least one first bead (second configuration).

In the rocker outer according to the second configuration, each of two vertical walls has at least one first bead. This makes it possible to further extend the cross-sectional line length of the rocker outer. Thus, when the rocker outer is deformed by a side collision with a pole, for example, the strain in the deformed portion and the vicinity thereof is more easily dispersed. Accordingly, it is possible to make the rocker outer less likely to break in the event of an automobile collision.

In the rocker outer according to the first or second configuration, the top plate may include a second bead. The second bead has a shape recessed inward of the rocker outer and extends in the longitudinal direction of the rocker outer (third configuration).

In the rocker outer according to the third configuration, the top plate includes the second bead, making it possible to further extend the cross-sectional line length of the rocker outer. This allows the strain in the deformed portion of the rocker outer and the vicinity thereof to be further dispersed in the event of an automobile collision. Therefore, the rocker outer can be made even less likely to break.

In the rocker outer according to the third configuration, the second bead may have a depth of 5.0 times or more the sheet thickness (fourth configuration).

In the rocker outer according to the fourth configuration, the top plate has a second bead, which is relatively deep. More specifically, the depth of the second bead is 5.0 times or more the sheet thickness of the top plate. This makes it possible to further extend the cross-sectional line length of the rocker outer, thereby allowing the strain in the deformed portion of the rocker outer and the vicinity thereof to be more easily dispersed in the event of an automobile collision. Therefore, the breakage of the rocker outer is more easily suppressed.

In the rocker outer according to the third or fourth configuration, in a transverse cross-section of the rocker outer in a state where the two vertical walls are positioned above and below, the second bead may have a bottom portion whose center is located below a center of the top plate (fifth configuration).

When the locker outer is rotated downward of the vehicle body in the event of a side collision of the automobile, the amount of intrusion of the locker outer into the lower side of the vehicle body may increase. This can affect components disposed on the lower side of the vehicle body, such as a battery. In this regard, in the fifth configuration, the center of the bottom portion of the second bead is located below the center of the top plate. This increases the rigidity of the portion of the rocker outer on the lower side of the vehicle body, and easily suppresses the rotation of the rocker outer downward of the vehicle body in the event of a side collision.

A door ring structure for an automobile according to an embodiment includes the rocker outer according to any one of the first to fifth configurations (sixth configuration).

In a production method according to an embodiment, the door ring structure according to the sixth configuration is produced. The production method includes: a preparation step of preparing a blank having an annular shape in a plan view; a heating step of heating the blank to an austenite transformation finish temperature or higher; and a forming step of forming the heated blank into the door ring structure using a die assembly, and performing quenching. The die assembly includes a punch, a die, and a pad. A portion of the punch for forming the rocker outer includes: a punch body; and a cushion facing the pad and capable of being received within the punch body. In the forming step, a portion of the blank that is to be formed into the top plate is held between the pad and the cushion, and thereafter the blank is pressed by the punch body and the die while the blank is held between the pad and the cushion (seventh configuration).

In a production method according to another embodiment, the door ring structure according to the sixth configuration is produced. The production method includes: a preparation step of preparing a blank having an annular shape in a plan view; a heating step of heating the blank to an austenite transformation finish temperature or higher; and a forming step of forming the heated blank into the door ring structure using a die assembly, and performing quenching. The die assembly includes a punch, a die, and a pad. In the forming step, a portion of the blank that is to be formed into the top plate is held between the pad and the punch, and the vertical walls and the flanges are formed by pressing the blank using the punch and the die (eighth configuration).

In order to simplify the process of producing the door ring structure, it is conceivable to integrally form a plurality of frame members including the rocker outer from the blank stage. However, when a relatively large-sized door ring structure is formed from an annular blank, its dimensional accuracy of the door ring structure may not be ensured. In particular, when producing the door ring structure by means of hot stamping, the dimensional accuracy of the door ring structure may be degraded. More specifically, during hot stamping, the annular blank is heated to the austenite transformation finish temperature or higher, and thereafter the heated blank is formed into the door ring structure using the die assembly and quenched. The door ring structure is brought into contact with the die assembly and subjected to heat removal (rapid cooling), and its microstructure is thereby transformed from austenite to martensite. At this time, if the cooling rate of the door ring structure is sufficiently ensured, a martensite single-phase structure is obtained. However, if the cooling rate is insufficient, ferrite will precipitate in addition to martensite.

In the production of a door ring structure by hot stamping, stress is released during phase transformation from austenite to martensite, and spring-back is less likely to occur. However, if, for example, the cooling rate is insufficient in a part of the door ring structure and ferrite precipitates, stress will not be sufficiently released in that part, which may result in spring-back. Since the door ring structure is large-sized and has an annular shape, even a slight spring-back occurring in one part may significantly affect the dimensional accuracy of the entire door ring structure. For example, if stress remains in the top plate of the rocker outer, spring-back may occur in the rocker outer and result in torsion in the door ring structure.

In the production method according to the seventh configuration, when the annular blank is formed into the door ring structure, a portion of the blank that is to be formed into the top plate of the rocker outer is first held between the pad and the cushion, at the position of the rocker outer. That is, the top plate of the rocker outer comes into contact with the pad and the cushion from the initial forming stage to ensure the cooling rate. Therefore, the microstructure of the top plate of the rocker outer is likely to become a single-phase martensite structure, and stress is easily released. This can reduce spring-back of the rocker outer, making it easier to suppress torsion of the door ring structure. Thus, the production method according to the seventh configuration can improve the dimensional accuracy of the door ring structure.

In the production method according to the seventh and eighth configurations, the door ring structure that includes the rocker outer is produced by hot stamping. As a result, the strength of the rocker outer can be increased (tensile strength: 980 MPa or more), and a relatively deep first bead can be formed in at least one of the vertical walls. For example, even if it is difficult to form the first bead by simple bending, a relatively deep first bead can be formed in one or both of the vertical walls of the rocker outer while suppressing cracking, by utilizing hot stamping.

Embodiments of the present disclosure will now be described with reference to the drawings. In the drawings, the same or equivalent components are assigned the same reference numerals, and the same description is not repeated.

### <First Embodiment>

### [Door ring structure]

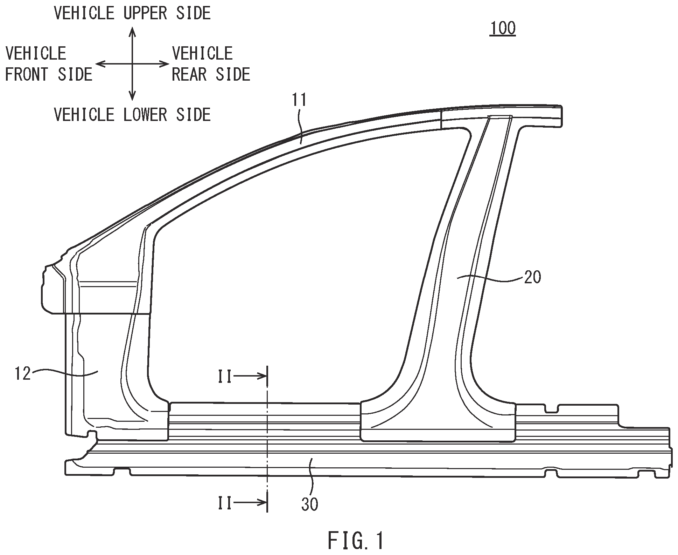

FIG. 1 is a diagram showing a schematic configuration of a door ring structure 100 according to the present embodiment. The door ring structure 100 is for use in an automobile. The door ring structure 100 is to be incorporated into a vehicle body of an automobile. FIG. 1 shows the door ring structure 100 as viewed from the side (left side) of the automobile when incorporated into the vehicle body of the automobile. In the following description of the present embodiment, the front, rear, left, and right sides of the door ring structure 100 and frame members included therein correspond respectively to the front, rear, left, and right sides of the vehicle body of the automobile with the door ring structure 100 incorporated into the vehicle body.

Referring to FIG. 1, the door ring structure 100 has an annular shape in a side view. The door ring structure 100 is joined to another door ring structure that is not shown in FIG. 1, from an outer side with respect to the left-right direction of the vehicle body. That is, the door ring structure 100 is an outer door ring structure. The door ring structure 100 includes an A-pillar upper outer 11, an A-pillar lower outer 12, a B-pillar outer 20, and a rocker outer 30.

The A-pillar lower outer 12 is disposed forward of and below the A-pillar upper outer 11, and is joined to the A-pillar upper outer 11. The B-pillar outer 20 is joined to a rear part of the A-pillar upper outer 11 and extends downward from the A-pillar upper outer 11. The rocker outer 30 is joined to lower end parts of the A-pillar lower outer 12 and the B-pillar outer 20, and extends from the A-pillar lower outer 12 to the B-pillar outer 20. That is, the rocker outer 30 has an elongated shape and extends in the front-rear direction when it is incorporated into the vehicle body of the automobile.

The size of the door ring structure 100 which has an annular shape in a side view is 1.0 m or more in a side view, for example. The size of the door ring structure 100 may be, for example, 4.0 m or less. The size of the door ring structure 100 refers to the length of a line segment connecting two points on the outer periphery of the door ring structure 100 that are separated by the longest distance as viewed along the vertical direction when the door ring structure 100 is placed on a horizontal plane.

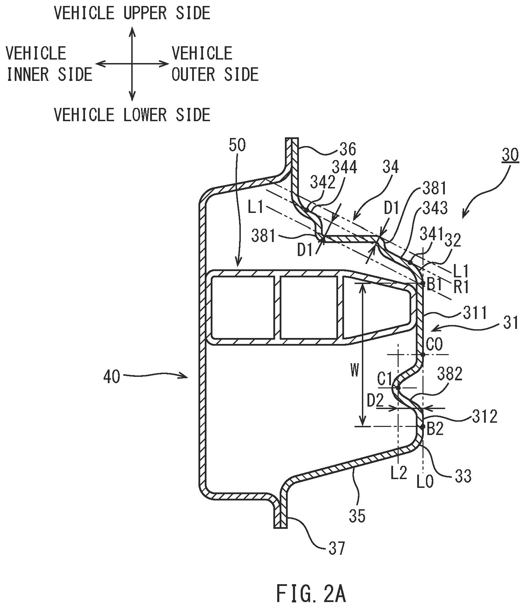

FIG. 2A is a cross-sectional view of FIG. 1 taken along line II-II. FIG. 2A illustrates a transverse cross-section of the rocker outer 30 included in the door ring structure 100.

Referring to FIG. 2A, the rocker outer 30 is formed of a steel sheet having a tensile strength of 980 MPa or more. The rocker outer 30 may have a tensile strength of 1470 MPa or more, and more preferably has a tensile strength of 1760 MPa or more. The tensile strength of the rocker outer 30 can be obtained by taking a test piece from a relatively flat part of the rocker outer 30 and performing a tensile test on the test piece according to JIS Z 2241: 2022. When fitted to the vehicle body of an automobile, the rocker outer 30 forms a closed cross section together with a rocker inner 40. An energy absorbing member 50 is disposed in the space formed by the rocker outer 30 and the rocker inner 40. The energy absorbing member 50 is, for example, an extruded aluminum alloy material.

The rocker outer 30 has a substantially hat-like shape in a transverse cross-sectional view. The rocker outer 30 includes a top plate 31, ridge line portions 32 and 33, vertical walls 34 and 35, and flanges 36 and 37.

The top plate 31 extends in the longitudinal direction of the rocker outer 30. That is, the top plate 31 substantially extends in the front-rear direction of the vehicle body of the automobile. The vertical walls 34 and 35 are arranged on the respective sides of the top plate 31. The flanges 36 and 37 are connected to the respective vertical walls 34 and 35, each on the side opposite to the top plate 31. Similar to the top plate 31, the ridge line portions 32 and 33, the vertical walls 34 and 35, and the flanges 36 and 37 extend in the longitudinal direction of the rocker outer 30.

The vertical wall 34 is connected to the top plate 31 via the ridge line portion 32. The ridge line portion 32 constitutes a corner portion between the top plate 31 and the vertical wall 34. The ridge line portion 32 has a curved shape protruding outward of the rocker outer 30 in a transverse cross-sectional view of the rocker outer 30. The flange 36 is continuous with the vertical wall 34 on the side opposite to the ridge line portion 32. The flange 36 protrudes outward of the rocker outer 30 from the vertical wall 34.

When the rocker outer 30 is fitted to the vehicle body of the automobile, the vertical wall 35 is positioned below the vertical wall 34. The vertical wall 35 is connected to the top plate 31 via the ridge line portion 33. The ridge line portion 33 constitutes a corner portion between the top plate 31 and the vertical wall 35. The ridge line portion 33 has a curved shape protruding outward of the rocker outer 30 in a transverse cross-sectional view of the rocker outer 30. The flange 37 is continuous with the vertical wall 35 on the side opposite to the ridge line portion 33. The flange 37 protrudes outward of the rocker outer 30 from the vertical wall 35.

The vertical wall 34, which is one of the vertical walls, includes at least one bead 381 extending in the longitudinal direction of the rocker outer 30. In the present embodiment, the vertical wall 34 includes two beads 381 adjacent to each other. The two beads 381 are formed in a stepwise shape in the vertical wall 34.

In the example shown in FIG. 2A, in the transverse cross-section of the rocker outer 30, one bead 381 protrudes inward of the rocker outer 30 from a reference line R1. In the transverse cross-section of the rocker outer 30, the other bead 381 protrudes outward of the rocker outer 30 from the reference line R1. The reference line R1 is a virtual straight line connecting an end portion 341 of the vertical wall 34 on the top plate 31 side and an end portion 342 of the vertical wall 34 on the flange 36 side. The end portion 341 is an R stop of the ridge line portion 32 on the vertical wall 34 side on the outer surface of the rocker outer 30. The end portion 342 is an R step of a curved section of the flange 36 that is adjacent to the vertical wall 34 on the outer surface of the rocker outer 30.

In the present embodiment, a portion of the vertical wall 34 between one bead 381 and the ridge line portion 32 is a flat portion 343. The vertical wall 34 also includes a flat portion 344 between the other bead 381 and the flange 36. The flat portions 343 and 344 are portions disposed on the reference line R1 and extending substantially along the reference line R1 in the transverse cross-sectional view of the rocker outer 30.

Each of the beads 381 of the vertical wall 34 has a depth D1. The depths D1 of the beads 381 may be the same as or different from each other. In the vertical wall 34, the sum of the depths D1 of the beads 381 with respect to the reference line R1 is 4.0 times or more the sheet thickness t of the top plate 31. The sum of the depths D1 of the beads 381 with respect to the reference line R1 may be 15.0 times or less the sheet thickness t of the top plate 31. When the vertical wall 34 includes a plurality of beads 381 as in the present embodiment, the sum of the depths D1 of the beads 381 is the sum of the depths D1 of all the beads 381. Meanwhile, when the vertical wall 34 includes only one bead 381, the sum of the depth D1 is the depth D1 of this bead 381. The depth D1 of each bead 381 is the shortest distance from the reference line R1 to a straight line L1 parallel to the reference line R1 and in contact with the top portion of the bead 381 that protrudes inward or outward of the rocker outer 30, in the transverse cross-section of the rocker outer 30. The straight line L1 is in contact with the top portion of the bead 381 on the outer surface of the rocker outer 30. The depth D1 of each bead 381 may be constant or non-constant over the entire length of the bead 381 extending in the longitudinal direction of the rocker outer 30. The bead 381 may extend in the longitudinal direction of the rocker outer 30 over the entire vertical wall 34, or may be provided only in a portion of the vertical wall 34. In the rocker outer 30, the length (longitudinal direction) of the region in which the sum of the depths D1 of the beads 381 is 4.0 times or more the sheet thickness t of the top plate 31 is preferably 600 mm or more, for example.

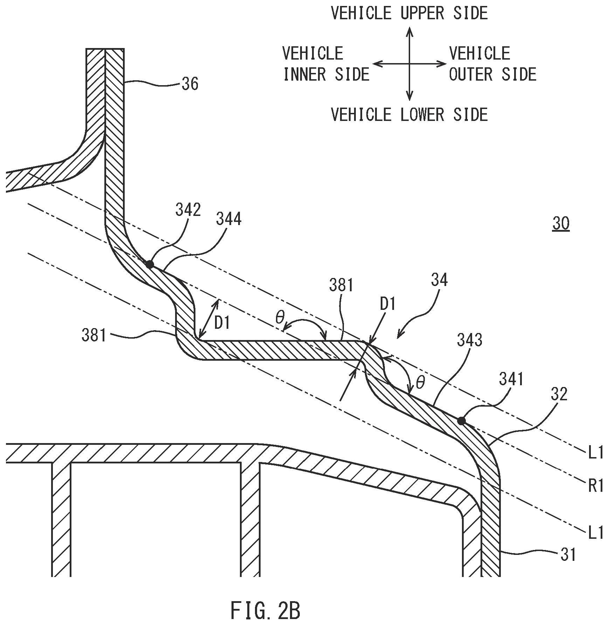

FIG. 2B is an enlarged view of the vertical wall 34 and the vicinity thereof in the transverse cross-section of the rocker outer 30 shown in FIG. 2A. Referring to FIG. 2B, in a transverse cross-sectional view of the rocker outer 30, each of the beads 381 preferably has no portion extending substantially parallel to the reference line R1. In other words, the top portion of each bead 381, i.e., the portion thereof in contact with the straight line L1, is preferably not flat. In the transverse cross-sectional view of the rocker outer 30, each bead 381 can have, for example, a triangular or curved shape protruding inward or outward of the rocker outer 30.

If the vertical wall 34 includes a plurality of beads 381 as in the present embodiment, the side surface of the bead 381 closest to the top plate 31 forms an angle θ with the reference line R1 in the transverse cross-sectional view of the rocker outer 30. If the vertical wall 34 includes one bead 381, the side surface of this bead 381 forms the angle θ with the reference line R1 in the transverse cross-sectional view of the rocker outer 30. The angle θ may be, for example, 120° or more. The side surface here refers to the surface of the bead 381 on the outer side of the protrusion of the bead 381, which protrudes outward or inward relative to the rocker outer 30, between the reference line R1 and the straight line L1. The angle θ is preferably 135° or more, and more preferably 150° or more. The angle θ may also be 170° or less. If more than half of the side surface of the bead 381 is a straight portion, the angle θ is the angle between this straight portion and the reference line R1. If the side surface of the bead 381 forms an arc shape as a whole, the angle θ is the angle formed by the tangent to the side surface of the bead 381 and the reference line R1 at an intermediate position between the reference line R1 and the straight line L1.

Returning to FIG. 2A, in the present embodiment, one vertical wall 34 includes a plurality of beads 381, whereas the other vertical wall 35 includes no bead 381. However, it is possible that the vertical wall 34 has no bead 381, and the vertical wall 35 includes at least one bead 381. Alternatively, each of the vertical walls 34 and 35 may include at least one bead 381. The vertical walls 34 and 35 need not necessarily be symmetric with respect to the width center line of the top plate 31 in the transverse cross-section of the rocker outer 30. For example, the vertical walls 34 and 35 may be different in inclination relative to the top plate 31 may be different. If both the vertical walls 34 and 35 have at least one bead 381, the position, shape, depth D1, and the like of the beads 381 may be different between the vertical walls 34 and 35. The number of beads 381 in the vertical wall 35 may be different from the number of beads 381 in the vertical wall 34. The width center line of the top plate 31 is a line passing through a width center C0 of the top plate 31 and perpendicular to the straight line L0, when the width center C0 of the top plate 31 is a point that is on the straight line L0 connecting a boundary B1 between the top plate 31 and one ridge line portion 32 and a boundary B2 between the top plate 31 and the other ridge line portion 33, and is located at an intermediate position between the boundaries B1 and B2, in the transverse cross-section of the rocker outer 30. The boundaries B1 and B2 are R stops of the ridge line portions 32 and 33 on the top plate 31 side, on the outer surface of the rocker outer 30.

Referring to FIG. 2A, in the present embodiment, the top plate 31 also includes a bead 382, which extends in the longitudinal direction of the rocker outer 30. The bead 382 has a shape recessed inward of the rocker outer 30. In the transverse cross-section of the rocker outer 30, the width of the opening of the bead 382 is smaller than the width W of the top plate 31 (straight-line distance between boundaries B1 and B2). Thus, when viewed in the transverse cross-section of the rocker outer 30, the top plate 31 includes flat portions 311 and 312 on the respective sides of the bead 382. In the transverse cross-sectional view of the rocker outer 30, the flat portions 311 and 312 are portions disposed on the straight line L0 and extending substantially along the straight line L0. The top plate 31 may have, for example, a width W of 30 mm or more and 300 mm or less.

The bead 382 is preferably disposed in the top plate 31 so as not to interfere with the energy absorbing member 50. In the example shown in FIG. 2A, the bead 382 is shifted downward from the width center C0 of the top plate 31.

More specifically, in the transverse cross-section of the rocker outer 30 with the rocker outer 30 fitted to the vehicle body of an automobile, i.e., with the vertical walls 34 and 35 positioned one above the other, the center (bottom center) C1 of a bottom portion of the bead 382 is disposed below the width center C0 of the top plate 31. The bottom center C1 of the bead 382 is preferably shifted by 10% or more of the width W of the top plate 31, downward from the width center C0 of the top plate 31. The bottom center C1 of the bead 382 is a center point, in the up-down direction, of a portion of a straight line L2 that is in contact with the bottom portion of the bead 382. The straight line L2 is parallel to the straight line L0 connecting the boundaries B1 and B2 and in contact with the bottom portion of the bead 381 on the outer surface of the rocker outer 30. In the transverse cross-section of the rocker outer 30, when the straight line L2 is in point contact with the bottom portion of the bead 382 on the outer surface of the rocker outer 30, the contact point between the bottom portion of the bead 382 and the straight line L2 is the bottom center C1 of the bead 382.

In the present embodiment, in the transverse cross-sectional view of the rocker outer 30, the bead 382 has a substantially symmetric shape with respect to a bottom center line of the bead 382 (a straight line passing through the bottom center C1 and perpendicular to the straight line L0). However, the bead 382 need not necessarily have a symmetric shape with respect to the bottom center line of the bead 382.

The bead 382 may have a depth D2 that is 5.0 times or more the sheet thickness t of the top plate 31. The depth D2 of the bead 382 may be 15.0 times or less the sheet thickness t of the top plate 31. The depth D2 of the bead 382 is the shortest distance between the straight lines L0 and L2 in the transverse cross-section of the rocker outer 30. The sheet thickness t of the top plate 31 is, for example, a sheet thickness measured at positions of the flat portions 311 and 312. The sheet thickness t is, for example, 0.8 mm or more. The sheet thickness t may be 2.0 mm or less. The depth D2 may be constant or non-constant over the entire length of the bead 382 extending in the longitudinal direction of the rocker outer 30. For example, the depth D2 of both end portions of the bead 382 in the longitudinal direction may be smaller than that of the other portions.

### [Method for producing door ring structure]

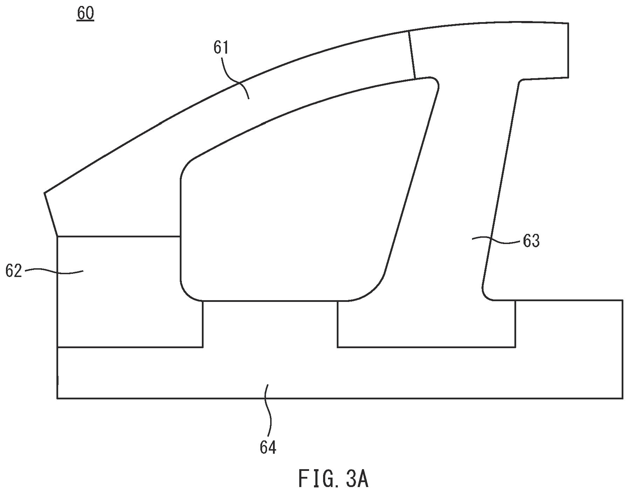

A method for producing the door ring structure 100 will be described below with reference to FIGS. 3A to 3E. The method for producing the door ring structure 100 according to the present embodiment includes a step for preparing a blank 60, a step for heating the blank 60, and a step for forming the blank 60.

### (Preparing step)

In the preparation step, a blank 60 having an annular shape in a plan view is prepared, as shown in FIG. 3A. The blank 60 has a shape obtained by expanding the annular door ring structure 100. In the example of the present embodiment, the blank 60 includes a plurality of steel sheets 61, 62, 63, and 64. The steel sheets 61, 62, 63, and 64 are arranged and joined to form an annular shape in a plan view of the blank 60. The steel sheets 61, 62, 63, and 64 are butt-joined to the other adjacent steel sheets by, for example, laser welding. Alternatively, the steel sheets 61, 62, 63, and 64 may be overlap-joined to the other adjacent steel sheets by, for example, spot welding. The method of joining the steel sheets 61, 62, 63, and 64 is not specifically limited.

In the example shown in FIG. 3A, the steel sheet 61 is disposed in a region that is to be formed into the A-pillar upper outer 11 (FIG. 1), in the blank 60. Steel sheets 62, 63, and 64 are disposed in regions that are to be formed into the A-pillar lower outer 12, the B-pillar outer 20, and the rocker outer 30 (FIG. 1), respectively, in the blank 60. The sheet thicknesses of the steel sheets 61, 62, 63, and 64 may be the same or different. The tensile strengths of the steel sheets 61, 62, 63, and 64 in the state of the blank 60 may be the same or different. The steel sheets 61, 62, 63, and 64 may be plated steel sheets having an aluminum-based or zinc-based plating layers on their surfaces, or may be bare steel sheets having no plating layer.

### (Heating step)

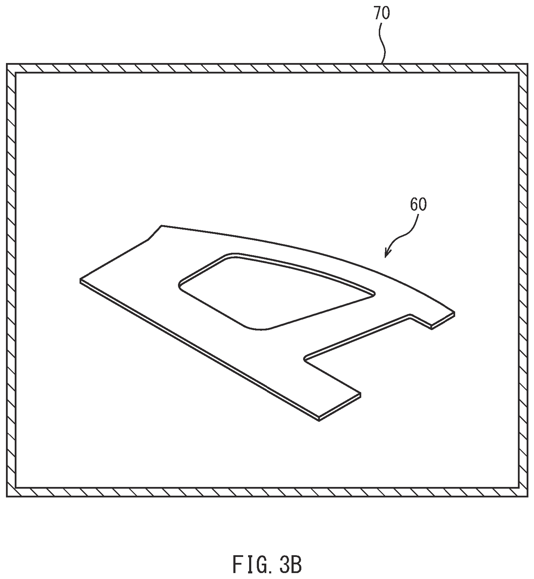

The prepared blank 60 is formed into the door ring structure 100 (FIG. 1) by hot stamping (hot pressing). During hot stamping, the blank 60 is subjected to a heating step. Referring to FIG. 3B, in the heating step, the blank 60 is heated by, for example, a heating furnace 70. The blank 60 is heated to the austenite transformation finish temperature (A_{c3} point) or higher. The blank 60 is heated, for example, to 900°C or higher. Thus, the microstructures in the steel sheets 61, 62, 63, and 64 (FIG. 3A) included in the blank 60 are transformed into an austenitic phase.

### (Forming step)

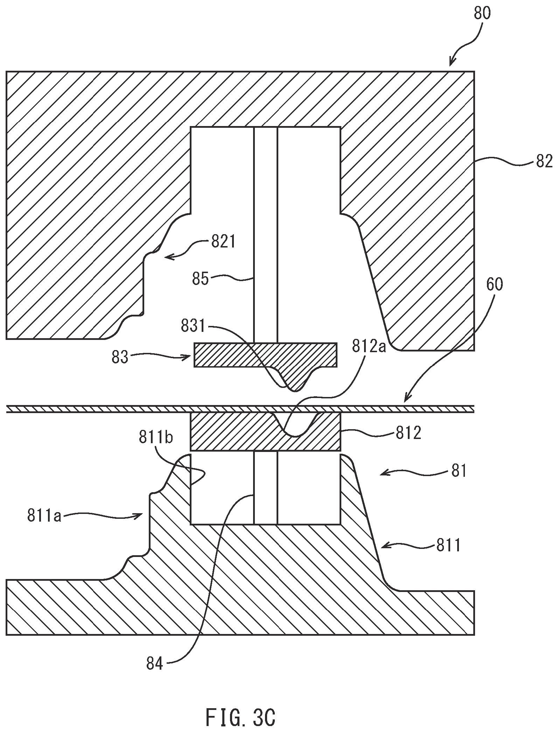

Referring to FIG. 3C, in the forming step, the heated blank 60 is formed into the door ring structure 100 (FIG. 1) having an annular shape in a plan view and quenched, using a die assembly 80. The blank 60 that has been heated in the heating step is removed from the heating furnace 70 (FIG. 3B) and carried to the die assembly 80. The die assembly 80 is mounted on a known press device. The die assembly 80 includes a punch 81, a die 82, and a pad 83.

First, a specific configuration of the die assembly 80 used in the forming step is described. FIG. 3C is a transverse cross-sectional view of a part of the die assembly 80 corresponding to the rocker outer 30 (FIGS. 1 and 2A). FIG. 3C shows a transverse cross-section of the die assembly 80 in an area for forming the bead 382 of the top plate 31 and the beads 381 of the vertical wall 34 of the rocker outer 30 shown in FIGS. 1 and 2A.

As shown in FIG. 3C, the portion of the punch 81 for forming the rocker outer 30 includes a punch body 811 and a cushion 812 disposed such that it can be received within the punch body 811. The punch body 811 has, in its side surface, a step portion 811a for forming the beads 381 (FIGS. 2A and 2B) in the vertical wall 34. The punch body 811 has a recessed receiving portion 811b on its top surface. The cushion 812 is supported by a bottom surface of the receiving portion 811b via an elastic member 84. The elastic member 84 is a member capable of stretching and contracting in the pressing direction. For example, a gas spring or the like may be used as the elastic member 84. When the elastic member 84 is stretched, the top surface of the cushion 812 projects from the top surface of the punch body 811. When the elastic member 84 is contracted, the cushion 812 is received in the receiving portion 811b of the punch body 811 such that the top surface of the cushion 812 is substantially flush with the top surface of the punch body 811.

The die 82 is arranged to face the punch 81 in the pressing direction. Each side surface of the die 82 includes a step portion 821 in correspondence with the step portion 811a in each side surface of the punch body 811. The pad 83 is arranged to face the cushion 812 in the pressing direction. In the example shown in FIG. 3C, the pad 83 is supported by the die 82 via an elastic member 85. The elastic member 85 is a member capable of stretching and contracting in the pressing direction. For example, a gas spring or the like may be used as the elastic member 85.

A recess 812a for forming the bead 382 (FIG. 2A) in the top plate 31 is formed in the surface of the cushion 812 of the punch 81 that faces the pad 83. A protrusion 831 is formed in a surface of the pad 83 that faces the cushion 812, in correspondence with the recess 812a of the cushion 812.

Next, press forming of the blank 60 using the die assembly 80 is described. Referring again to FIG. 3C, before the start of press forming, the elastic member 84 is stretched, and the cushion 812 of the punch 81 projects from the punch body 811 toward the pad 83. Also, the elastic member 85 is stretched, and at least the surface of the pad 83 that faces the cushion 812 is positioned on the punch 81 side with respect to the die 82. The blank 60 that has been heated in the heating step is arranged between the punch 81 and the die 82 and pad 83. The blank 60 may be placed on the cushion 812, for example.

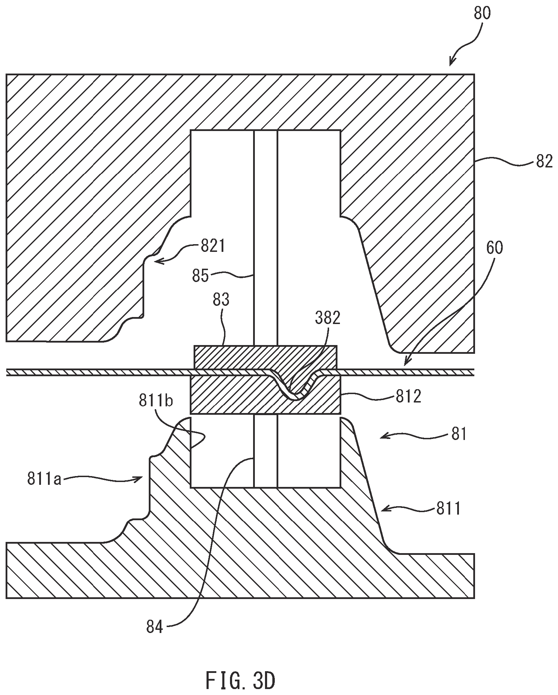

Referring to FIG. 3D, after arranging the blank 60 between the punch 81 and the die 82 and pad 83, the die 82 and the pad 83 are moved relative to the punch 81 in the pressing direction to bring the die 82 and the pad 83 close to the punch 81. Consequently, first, the blank 60 is held between the pad 83 and the cushion 812 of the punch 81. More specifically, the portion of the blank 60 that is to be formed into the top plate 31 (FIG. 2A) of the rocker outer 30 is held between the pad 83 and the cushion 812 to form the bead 382.

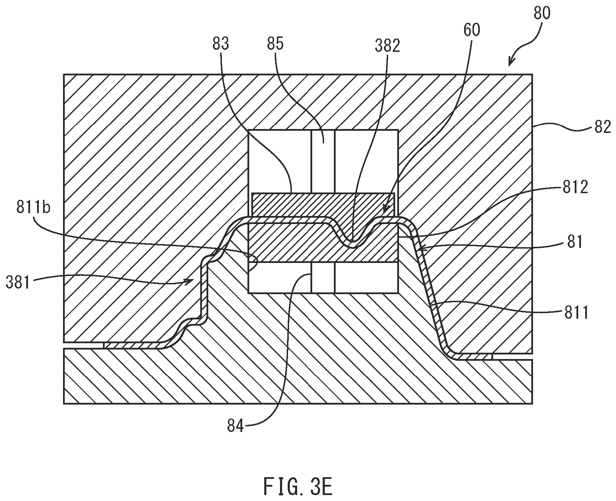

Thereafter, as shown in FIG. 3E, the blank 60 is pressed by the punch body 811 and the die 82 while being held between the pad 83 and the cushion 812. More specifically, after the blank 60 is held between the pad 83 and the cushion 812, the die 82 and the pad 83 are brought closer to the punch 81 in the pressing direction in this state. Thus, the elastic member 84 contracts, and the cushion 812 is received in the receiving portion 811b of the punch body 811. Furthermore, the elastic member 85 contracts, and the die 82 moves toward the punch 81 relative to the pad 83. Then, the blank 60 is pressed by the punch body 811 and the die 82, and is formed into a shape conforming to the forming surfaces of the punch 81, the die 82, and the pad 83. The blank 60 is kept in a state held between the punch 81 and the die 82 and pad 83. The blank 60 is subjected to heat removal (rapid cooling) by the die assembly 80, and its microstructure is transformed into martensite.

Although not shown, the frame members 11, 12, and 20 of the door ring structure 100, other than the rocker outer 30, are also formed by the die assembly 80 including the punch 81, the die 82, and the pad 83. However, the punch 81 need not necessarily be provided with the cushion 812 at positions where the other frame members 11, 12, and 20 are formed. That is, as for the parts of the die assembly 80 where no bead needs to be formed in the top plates, forming may be performed using a punch that is not divided into a punch body and a cushion (a common block-shaped punch).

### [Effect]

When fitted to the vehicle body of an automobile, the rocker outer 30 according to the present embodiment forms a closed cross section together with the rocker inner 40. The rocker outer 30 is fitted to the vehicle body of the automobile with the vertical wall 35 positioned below the vertical wall 34, and with the top plate 31 oriented outward in the left-right direction of the vehicle body. If, for example, a pole-shaped colliding object collides with the vehicle body from the side, the rocker outer 30 is subjected to a load applied from the top plate 31 side. When a portion of the rocker outer 30 is pushed inward of the vehicle body by the collision load and is deformed, and a ridge-like part is formed in the rocker outer 30 due to the deformation, tensile stress is generated in the ridge-like part, and strain is concentrated on this part. However, in the present embodiment, the vertical wall 34 has at least one bead 381, thereby ensuring the cross-sectional line length of the rocker outer 30. In particular, the cross-sectional line length of the rocker outer 30 is sufficiently extended due to the sum of the depths D1 of one or more beads 381 in the vertical wall 34 is 4.0 times or more the sheet thickness t of the top plate 31. Therefore, when, for example, the rocker outer 30 is deformed by a side collision with a pole, the strain is easily dispersed in the direction of the cross-sectional line length in the deformed portion and the vicinity thereof. This can reduce the strain in the ridge-like part. As a result, even when the rocker outer 30 has a tensile strength of 980 MPa or more, it is possible to make the rocker outer 30 unlikely to break in the event of an automobile collision.

Each bead 381 is preferably located at a height that is 70% or less of the height of the vertical wall 34 as measured from the flange 36, where the height direction refers to a direction perpendicular to the straight line L0 connecting the boundary B1 between the top plate 31 and the ridge line portion 32 and the boundary B2 between the top plate 31 and the ridge line portion 33, and the height of the vertical wall 34 refers to the straight-line distance in the height direction from the flat surface of the flange 36 (outer side of the rocker outer 30) to the surface of the top plate 31 (outer side of the rocker outer 30). This enables the distance between the ridge line portion 32 and the bead 381 to be ensured. In this case, the ridge-like part formed by the deformation of the rocker outer 30 is unlikely to connect with the bead 381 in the event of an automobile collision. This allows the effect of ensuring the cross-sectional line length of the bead 381 to be easily exhibited. Similarly, in the case of providing at least one bead 381 in the vertical wall 35, the bead 381 is preferably located at a height that is 70% or less of the height of the vertical wall 35 as measured from the flange 37. The height of the vertical wall 35 is the straight-line distance in a direction perpendicular to the straight line L0 from the flat surface of the flange 37 (outer side of the rocker outer 30) to the surface of the top plate 31 (outer side of the rocker outer 30) in the transverse cross-section of the rocker outer 30.

In the rocker outer 30 according to the present embodiment, the top plate 31 also includes the bead 382. Thus, the cross-sectional line length of the rocker outer 30 can be further extended. This allows the strain to be further reduced in the deformed portion of the rocker outer 30 and the vicinity thereof in the event of an automobile collision. The strain reduction effect is particularly significant when the depth D2 of the bead 382 is 5.0 times or more the sheet thickness t of the top plate 31. Accordingly, it is possible to make the rocker outer 30 less likely to break in the event of an automobile collision.

However, if the depth D2 of the bead 382 is excessively large, it will be difficult to form the bead 382 in the top plate 31. Thus, the depth D2 is preferably 15.0 times or less the sheet thickness t of the top plate 31. Similarly, it will be difficult to form the vertical wall 34 if the depth D1 of the bead 381 is excessively large. Thus, the sum of the depths D1 of one or more beads 381 in the vertical wall 34 is preferably 15.0 times or less the sheet thickness t of the top plate 31. Also, in the case of providing one or more beads 381 in the vertical wall 35, the sum of the depths D1 of the one or more beads 381 in the vertical wall 35 is preferably 15.0 times or less the sheet thickness t of the top plate 31, from the standpoint of formability.

For example, if the bead 381 having a rectangular shape in the transverse cross-sectional view of the rocker outer 30 is provided in the vertical wall 34 and/or the vertical wall 35, the top portion of the bead 381 will extend parallel to the reference line R1, and the difference in cross-sectional line length from the case without the bead 381 is not likely to be large. Therefore, each bead 381 preferably has no portion extending substantially parallel to the reference line R1 in the transverse cross-sectional view of the rocker outer 30. This makes the cross-sectional line length of the vertical wall 34 and/or the vertical wall 35 more likely to be larger than in the case without the bead 381, thereby enhancing the effect of extending the cross-sectional line length achieved by the bead 381. As a result, when the rocker outer 30 is deformed in the event of an automobile collision, strain is more easily dispersed in the direction of the cross-sectional line length, and the strain in a ridge-like part resulting from the deformation can be further reduced.

In the present embodiment, the angle θ between the reference line R1 and the side surface of the bead 381 on the top plate 31 side in the transverse cross-sectional view of the rocker outer 30 is, for example, 120° or more, preferably 135° or more, and more preferably 150° or more. By ensuring a relatively large angle θ between the side surface of the bead 381 and the reference line R1 in this manner, the bead 381 is easily deformed in a direction in which it is opened in the event of an automobile collision, and the material of the bead 381 is easily supplied to the ridge line portions 32 or 33. This can make it difficult for the ridge line portions 32 and 33 to crack.

In the rocker outer 30 according to the present embodiment, the bead 382 of the top plate 31 is shifted from the width center C0 of the top plate 31 toward the lower vertical wall 35. More specifically, in the transverse cross-section of the rocker outer 30, the bottom center C1 of the bead 382 is disposed below the width center C0 of the top plate 31. This can prevent the bead 382 of the top plate 31 from interfering with the energy absorbing member 50. Further, the portion of the rocker outer 30 on the lower side of the vehicle body is likely to have high rigidity. This makes it possible to suppress the rotation of the rocker outer 30 downward of the vehicle body in the event of a side collision, and reduce the amount of intrusion of the rocker outer 30 into the lower side of the vehicle body.

In the present embodiment, when forming the door ring structure 100 including the A-pillar upper outer 11, the A-pillar lower outer 12, the B-pillar outer 20, and the rocker outer 30 from the annular blank 60, the top plate 31 is held between the pad 83 and the cushion 812 provided in the punch 81 at the position of the rocker outer 30. That is, the top plate 31 of the rocker outer 30 comes into contact with the pad 83 and the cushion 812 from the initial stage of forming. This ensures the cooling rate of the top plate 31, thereby causing the microstructure of the top plate 31 to easily become a single-phase martensite structure and allowing stress in the top plate 31 to be easily released. Thus, spring-back of the rocker outer 30 can be reduced, and torsion of the door ring structure 100 caused by the spring-back can be suppressed. Accordingly, dimensional accuracy of the door ring structure 100 can be improved.

In the present embodiment, the rocker outer 30 is formed by hot stamping. That is, the rocker outer 30 is a hot-stamped member. Therefore, the rocker outer 30 contains a martensite phase in its microstructure. For example, the martensite fraction may be 80% or more in a cross-section of the rocker outer 30. The martensite fraction is preferably 85% or more, and more preferably 90% or more. The martensite fraction can be measured as follows. That is, 10 or more analysis samples (e.g., with a long-side size of about 10 mm) are cut out from positions that are 20 mm or more away from the leading ends of the flanges 36 and 37 and 10 mm or more away from each other, on a cross-section at a random location on the rocker outer 30. Thereafter, each sample is polished and etched with LePera etchant such that an observation surface is a surface along the sheet thickness direction. Thereafter, the analysis samples are observed at a position one-fourth of the sheet thickness away from the surface, in the sheet thickness direction, using an electron microscope at a magnification of 1000, and optical micrographs are obtained. Image analysis can be performed on the obtained optical micrographs using, for example, commercially available image analysis software (Photoshop CS5 manufactured by Adobe), and the proportion of the martensite area can be obtained as the martensite fraction.

As an image analysis method, a maximum brightness value Lmax and a minimum brightness value Lmin are obtained from each image, a portion having pixels whose brightness ranges from Lmax-0.3 (Lmax-Lmin) to Lmax is defined as a white region, and the proportion of pixels in the white region to the total number of pixels is calculated to measure the martensite fraction. Such image analysis is performed for a total of 10 observation fields of each analysis sample to obtain the martensite fraction, and an average value of thus-obtained martensite fractions is used as the martensite fraction of the rocker outer 30.

### <Second Embodiment>

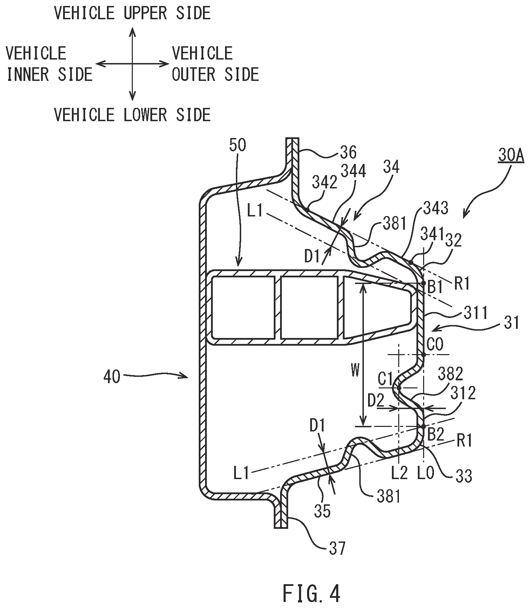

FIG. 4 is a transverse cross-sectional view of a rocker outer 30A according to the second embodiment. The rocker outer 30A according to the present embodiment has the almost same configuration as the rocker outer 30 (FIGS. 1 and 2A) according to the first embodiment. However, the rocker outer 30A is different from the rocker outer 30 according to the first embodiment in that each of the vertical walls 34 and 35 includes a bead 381.

Referring to FIG. 4, each of the vertical walls 34 and 35 includes one bead 381. The bead 381 protrudes inward of the rocker outer 30A from the reference line R1 in a transverse cross-section of the rocker outer 30A. Note that the vertical wall 34 and/or the vertical wall 35 may alternatively include a bead 381 that protrudes outward of the rocker outer 30A from the reference line R1.

The bead 381 of the vertical wall 34 has a depth D1 that is 4.0 times or more the sheet thickness t of the top plate 31. The depth D1 of the bead 381 of the vertical wall 34 may be 15.0 times or less the sheet thickness t of the top plate 31.

Similar to the vertical wall 34, the bead 381 of the vertical wall 35 also has a depth D1 that is 4.0 times or more the sheet thickness t of the top plate 31. The depth D1 of the bead 381 of the vertical wall 35 may be 15.0 times or less the sheet thickness t of the top plate 31. Although not shown, the angle θ between the side surface of the bead 381 and the reference line R1 in each of the vertical walls 34 and 35 of the rocker outer 30A may be the same as in the first embodiment.

The rocker outer 30A according to the present embodiment can also exhibit the same effect as the rocker outer 30 according to the first embodiment. That is, the configuration of the present embodiment also makes it possible to disperse distortion occurring in the rocker outer 30A in the event of, for example, a side collision of an automobile with a pole, and to suppress breakage of the rocker outer 30A.

### <Third Embodiment>

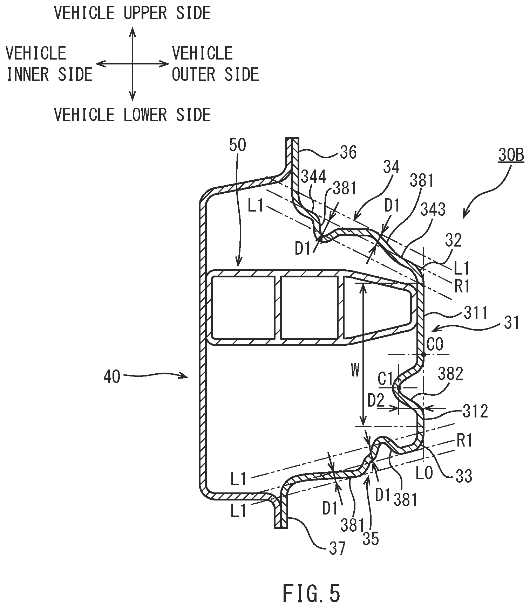

FIG. 5 is a transverse cross-sectional view of a rocker outer 30B according to the third embodiment. The rocker outer 30B according to the present embodiment has generally the same basic configuration as the rocker outers 30 and 30A (FIGS. 2A and 4) according to the other embodiments. However, the rocker outer 30B is different from the other rocker outers 30 and 30A in the shape of the bead 381.

In the present embodiment, each of the vertical walls 34 and 35 includes two beads 381. In the present embodiment, each of the vertical walls 34 and 35 has one bead 381 having a shape projecting outward of the rocker outer 30B, and the other bead 381 having a shape recessed inward of the rocker outer 30B. Note that, in the present embodiment as well, the sum of the depths D1 of the plurality of beads 381 in each of the vertical walls 34 and 35 is 4.0 times or more the sheet thickness t of the top plate 31. Thus, the configuration of the present embodiment also makes it possible to disperse distortion occurring in the rocker outer 30B in the event of, for example, a side collision of an automobile with a pole, and to suppress breakage of the rocker outer 30B. The sum of the depths D1 of the plurality of beads 381 in each of the vertical walls 34 and 35 may be 15.0 times or less the sheet thickness t of the top plate 31. Further, in each of the vertical walls 34 and 35, the angle θ (not shown) between the side surface of the bead 381 closer to the top plate 31 and the reference line R1 may be set in the same manner as in the first embodiment.

When the door ring structure 100 (FIG. 1) includes the rocker outer 30A according to the second embodiment or the rocker outer 30B according to the third embodiment, this door ring structure 100 can be produced using the same production method as the first embodiment. For example, a cam or the like can also be used to form the beads 381 in the case where any of the beads 381 of the vertical wall 34 and/or the vertical wall 35 has a portion with a negative draft angle, i.e., a portion angled so as to extend inward relative to the pressing direction as in the rocker outers 30A and 30B.

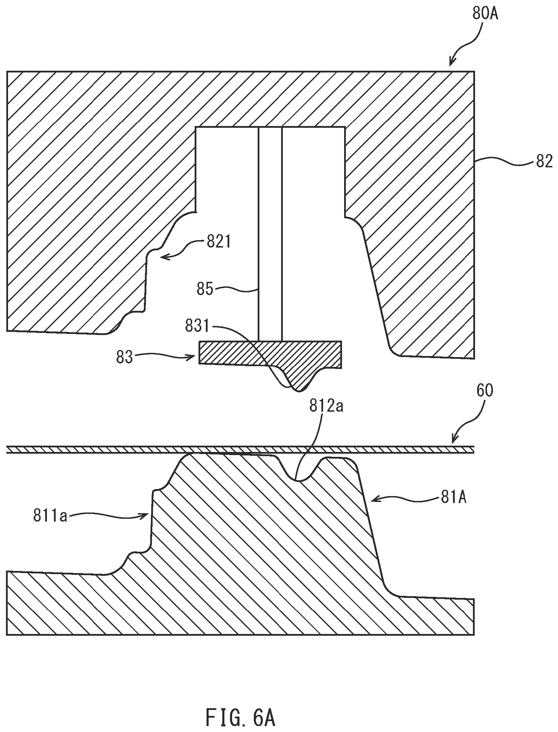

The door ring structure 100 that includes any of the rocker outers 30, 30A, and 30B may be produced using a production method different from the production method described in the first embodiment, as shown in FIGS. 6A to 6C.

FIGS. 6A to 6C are schematic views for illustrating a method for producing the door ring structure 100 (FIG. 1) that includes the rocker outer 30 (FIG. 2A) according to the first embodiment. The production method here includes the same preparation step and heating step as those described in the first embodiment, but differs from the first embodiment in the mode of the forming step. As shown in FIGS. 6A to 6C, in the forming step, a die assembly 80A, which is different from the die assembly 80 (FIG. 3C) of the first embodiment, is used to form the heated blank 60 into the door ring structure 100 (FIG. 1) having an annular shape in a plan view, and quench it.

FIGS. 6A to 6C show transverse cross-sections of a part of the die assembly 80A corresponding to the rocker outer 30 (FIGS. 1 and 2A). The die assembly 80A includes a punch 81A, the die 82, and the pad 83. The die assembly 80A differs from the die assembly 80 (FIG. 3C) of the first embodiment, mainly in the configuration of the punch 81A.

In the die assembly 80 of the first embodiment, the portion of the punch 81 for forming the rocker outer 30 (FIG. 2A) includes the cushion 812 (FIG. 3C) disposed such that it can be received in the punch body 811. In contrast, in the die assembly 80A, the portion of the punch 81A for forming the rocker outer 30 does not include such a cushion. The punch 81A has a forming surface corresponding to the rocker outer 30. The top surface of the punch 81A has a recess 812a for forming the bead 382 (FIG. 2A). The side surface of the punch 81A has a step portion 811a for forming the beads 381 (FIGS. 2A and 2B).

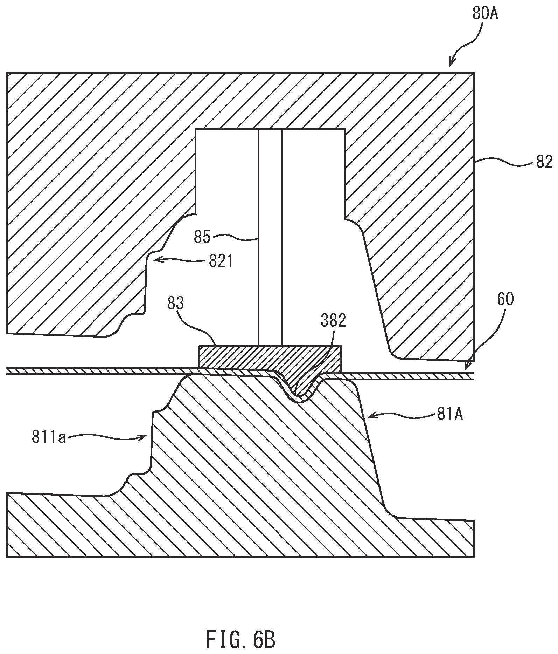

In the forming step, first, the blank 60 is disposed between the punch 81A and the die 82 and pad 83, as shown in FIG. 6A. Thereafter, the die 82 and the pad 83 are moved relative to the punch 81A in the pressing direction, and the die 82 and the pad 83 are brought close to the punch 81A. Thus, the blank 60 is first held between the pad 83 and the punch 81A. More specifically, as shown in FIG. 6B, the portion of the blank 60 that is to be formed into the top plate 31 (FIG. 2A) of the rocker outer 30 is held between the pad 83 and the punch 81A, and the bead 382 is formed in the blank 60.

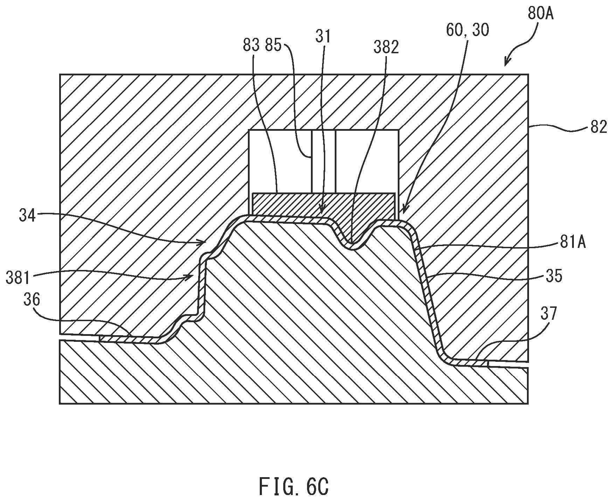

Thereafter, as shown in FIG. 6C, the blank 60 is pressed by the punch 81A and the die 82 to form the vertical walls 34 and 35 and the flanges 36 and 37. One or more beads 381 are formed in the vertical wall 34. More specifically, the punch 81A and the die 82 are relatively brought close to each other in the pressing direction with the blank 60 held between the pad 83 and the punch 81A. As a result, the elastic member 85 contracts, and the die 82 moves toward the punch 81A relative to the pad 83. Then, the blank 60 is pressed by the punch 81A and the die 82 and formed into a shape conforming to the forming surface of the punch 81A. The blank 60 is kept in a state held between the punch 81A and the die 82 and pad 83. The blank 60 is subjected to heat removal (rapid cooling) by the die assembly 80A, and its microstructure is transformed into martensite. Although not shown, the parts of the door ring structure 100 other than the rocker outer 30 are also formed by the die assembly 80A.

While FIGS. 6A to 6C illustrate an example of producing the door ring structure 100 (FIG. 1) including the rocker outer 30 according to the first embodiment, the door ring structure 100 including the rocker outer 30A or 30B according to the other embodiments can also be produced by the production method shown in FIGS. 6A to 6C. When producing the door ring structure 100 including any of the rocker outers 30, 30A, and 30B, a cam or the like can also be used to form the beads 381 in the case where any of the beads 381 of the vertical wall 34 and/or the vertical wall 35 has a portion with a negative draft angle, i.e., an angular portion that extends inward relative to the pressing direction. Alternatively, the rocker outer 30, 30A, or 30B may be inclined, as appropriate, relative to the pressing direction so as not to create a negative draft angle portion in the rocker outer 30, 30A, or 30B.

While the embodiments according to the present disclosure have been described so far, the present disclosure is not limited to the above embodiments, and various modifications are possible unless departing from the gist of the present disclosure.

The above embodiments may be combined as appropriate. For example, the rocker outer 30 according to the first embodiment may adopt the configuration of the vertical wall 35 of the rocker outer 30A according to the second embodiment or the rocker outer 30B according to the third embodiment. Similarly, the vertical wall 34 or 35 of the rocker outer 30A according to the second embodiment may adopt the configuration of the vertical wall 34 or 35 of the rocker outer 30B according to the third embodiment. That is, it is possible to form only one bead 381 in one of the vertical walls 34 and 35 and to form a plurality of beads 381 in the other of the vertical walls 34 and 35. In the rocker outers 30A and 30B, either one of the vertical walls 34 and 35 may have no bead 381.

In the rocker outers 30, 30A, and 30B according to the above embodiments, each of the vertical walls 34 and 35 includes one or two beads 381. However, each of the vertical walls 34 and 35 may include three or more beads 381 protruding inward or outward of the rocker outer from the reference line R1 in a transverse cross-sectional view of the rocker outer. In the case where the vertical wall 34 and/or the vertical wall 35 includes three or more beads 381, also, the sum of the depths D1 of the beads 381 in the relevant vertical wall is 4.0 times or more the sheet thickness t of the top plate 31.

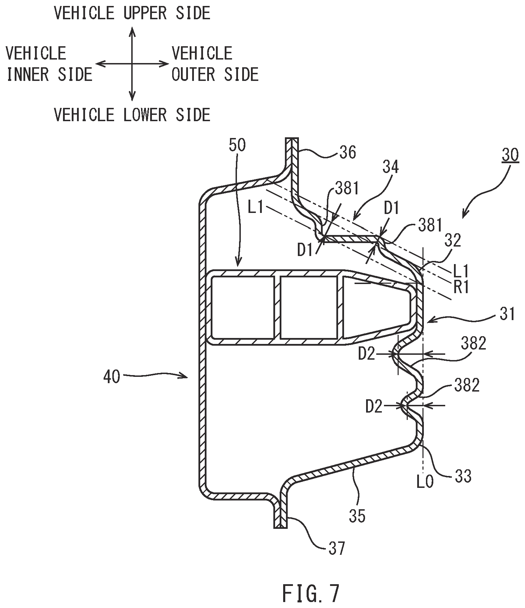

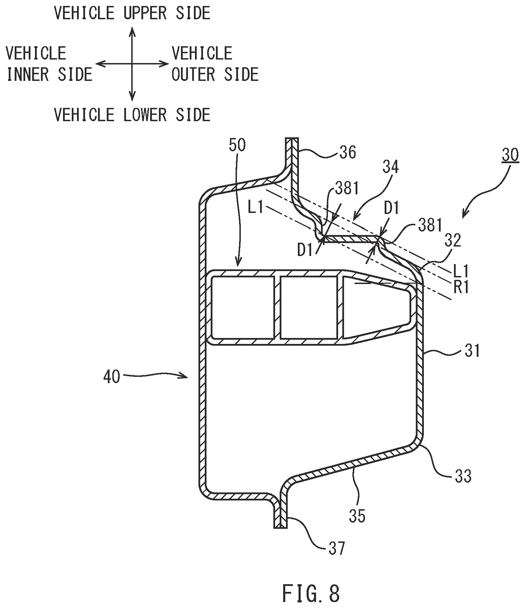

In the rocker outer 30 according to the first embodiment, the top plate 31 includes one bead 382. However, as shown in FIG. 7, the top plate 31 may include a plurality of beads 382 arranged in the up-down direction of the vehicle body. Alternatively, the top plate 31 may include no bead 382, as shown in FIG. 8. Similarly, in the rocker outers 30A and 30B according to other embodiments, the top plate 31 may include a plurality of beads 382 or no bead 382. In the case where top plate 31 includes a plurality of beads 382, the depth D2 of each bead 382 may be the same as or different from the depths D2 of the other beads 382. The depth D2 of at least one of the plurality of beads 382 is preferably 5.0 times or more the sheet thickness t of the top plate 31.

In the rocker outers 30, 30A, and 30B according to the above embodiments, the bead 382 of the top plate 31 has a generally triangular shape in a transverse cross-sectional view. However, the cross-sectional shape of the bead 382 is not specifically limited. Similarly, the shape of the bead 381 included in the vertical wall 34 and/or 35 is not specifically limited. For example, each of the beads 381 and 382 may have a polygonal shape such as a rectangular or trapezoidal shape in a transverse cross-section. Note that, from the standpoint of further extending the cross-sectional line lengths of the rocker outers 30, 30A, and 30B, the bead 381 of the vertical wall 34 and/or 35 preferably has a shape with which its top portion does not extend substantially parallel to the reference line R1, such as a triangular shape or a curved shape. Similarly, the bead 382 of the top plate 31 may have a shape with which its bottom portion does not extend substantially parallel to the straight line L0, such as a triangular or curved shape.

In the above embodiments, the annular blank 60, which is the material of the door ring structure 100, includes four steel sheets 61, 62, 63, and 64. However, the blank 60 may include two or three steel sheets forming an annular shape, or may include five or more steel sheets. The positions of joints between the steel sheets in the blank 60 and the door ring structure 100 can be changed as appropriate.

In the above embodiments, each of the plurality of steel sheets forming the annular blank 60 may be single-layered or multi-layered. That is, each of these steel sheets may be a sheet material formed of a single steel sheet, or a sheet material constituted by stacking a plurality of steel sheets.

In the above embodiments, the rocker outers 30, 30A, and 30B are produced by hot stamping. To ensure sufficient depths D1 and D2 of the beads 381 and 382, the rocker outers 30, 30A, and 30B are preferably produced by hot stamping. However, the rocker outers 30, 30A, and 30B may alternatively be produced by cold forming. Further, in the above embodiments, each of the rocker outers 30, 30A, and 30B is press-formed integrally with the other frame members 11, 12, and 20. However, the rocker outers 30, 30A, and 30B may alternatively be press-formed separately from the other frame members 11, 12, and 20.

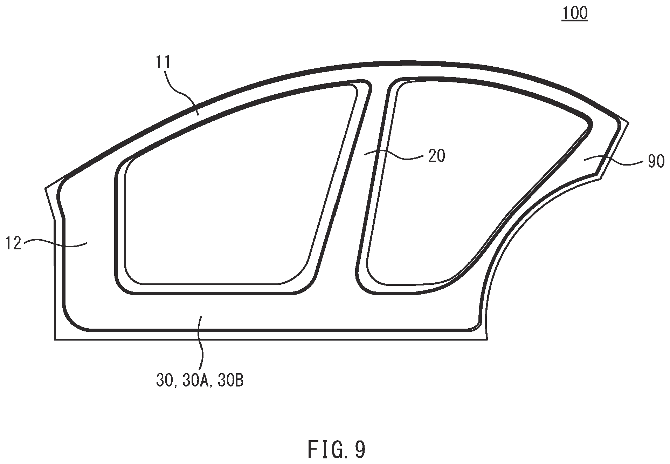

In the above embodiments, the door ring structure 100 includes any of the rocker outers 30, 30A, and 30B, the A-pillar upper outer 11, the A-pillar lower outer 12, and the B-pillar outer 20. However, the door ring structure 100 may also include yet other components. For example, the door ring structure 100 may further include a C-pillar outer 90 as shown in FIG. 9. The door ring structure 100 according to the above embodiments has a single-ring shape. In contrast, the door ring structure 100 shown in FIG. 9 has a double-ring shape. In the case of integrally forming the door ring structure 100 having a double-ring shape, a blank to serve as its material also has a double-ring shape.

### EXAMPLES

The present disclosure will be described in more detail below by way of examples. However, the present disclosure is not limited to the following examples.

In order to confirm the effect of the present disclosure, CAE analysis was performed for the rocker outers described in the above embodiments using commercially available software (LS-DYNA R9.3.1, manufactured by Ansys, Inc.) while changing the depth of the bead of the vertical wall. Table 1 shows the conditions and results of the analysis.

**[Table 1]**

| | Top plate bead depth (mm) | Top plate bead depth / Sheet thickness | Vertical wall bead | Sum of vertical wall bead depths (mm) | Sum of vertical wall bead depths / Sheet thickness | Maximum value of equivalent plastic strain (reduction from Comp.Ex. 1) |
|---|---|---|---|---|---|---|
| Comp. Ex. 1 | - | - | - | - | - | - |
| Comp. Ex. 2 | 9.0 | 7.5 | - | - | - | 1.6% |
| Comp. Ex. 3 | - | - | Each having one protruding bead | 3.0 | 2.5 | -4.8% |
| Ex. 1 | - | - | Each having one recessed bead | 5.0 | 4.2 | 21.9% |
| Ex. 2 | - | - | Each having two beads in a step-like shape (one recessed bead and one protruding bead) | 7.5 | 6.3 | 18.7% |
| Ex. 3 | 9.0 | 7.5 | Each having two beads in a step-like shape (one recessed bead and one protruding bead) | 7.5 | 6.3 | 19.1% |
| Ex. 4 | - | - | Each having one recessed bead | 8.0 | 6.7 | 25.3% |
| Ex. 5 | - | - | Each having one protruding bead | 7.2 | 6.0 | 33.8% |
| Ex. 6 | - | - | Only vertical wall on upper side of vehicle body having one recessed bead | 7.5 | 6.3 | 18.6% |

In this analysis, for comparative examples 1 to 3 and examples 1 to 6 shown in Table 1, a vehicle body with a door ring structure including a rocker outer fitted was made to collide with a pole having a diameter of 254 mm at a collision angle of 75° and a speed of 32 km per hour, in conformity with the standards for pole side collision test of the US Department of Transportation's National Highway Traffic Safety Administration (NHTSA). The equivalent plastic strain at that time was evaluated. More specifically, for each of the comparative examples and the examples, the equivalent plastic strain was obtained at 2-mm intervals along a ridge-like part occurring due to deformation of the rocker outer at the time of the collision, from the boundary with the B-pillar outer to the position 34 mm therefrom on the rocker outer side. The maximum value of the obtained equivalent plastic strain was evaluated. A steel sheet having a tensile strength of 1470 MPa was used as the material for the rocker outer, and the sheet thickness of the steel sheet was 1.2 mm.

In the rocker outer according to comparative example 1, the top plate and the two vertical walls include no bead. In the rocker outer according to comparative example 2, the top plate includes one bead, while the two vertical walls include no bead. In the rocker outer according to comparative example 3, the top plate includes no bead, while each vertical wall includes one protruding bead. Here, in comparative example 3, the depth of the bead of each vertical wall is less than 4.0 times the sheet thickness of the top plate: 1.2 mm. Meanwhile, in the rocker outer according to example 1, the top plate includes no bead, while each vertical wall includes one recessed bead. In the rocker outer according to example 2, the top plate includes no bead, while each vertical wall includes two beads formed in a step-like shape (uneven shape). In the rocker outer according to example 3, the top plate includes one bead, and each vertical wall includes two beads in a step-like shape as in example 2. In the rocker outer according to example 4, the top plate includes no bead, and each vertical wall includes one recessed bead. In the rocker outer according to example 5, the top plate includes no bead, and each vertical wall includes one protruding bead. In the rocker outer according to example 6, the top plate includes no beads, and only one of the vertical walls (vertical wall on the upper side of the vehicle body) includes one recessed bead. In examples 1 to 6, the sum of the bead depths in each vertical wall is 4.0 times or more the sheet thickness of the top plate: 1.2 mm.

As shown in Table 1, in comparative example 3 in which each vertical wall had a relatively shallow bead (a bead having a depth less than 4.0 times the sheet thickness of the top plate), the maximum value of the equivalent plastic strain was greater than in comparative examples 1 and 2 in which each vertical wall had no bead. That is, the strain was concentrated in comparative example 3, even though each vertical wall included a bead. In contrast, in examples 1 to 6 in which each vertical wall had a bead such that the sum of the depths was 4.0 time or more the sheet thickness of the top plate, the maximum value of the equivalent plastic strain was significantly smaller than in comparative examples 1 to 3. In example 1 in which the sum of the depths of the beads was 4.2 times the sheet thickness of the top plate, the maximum value of the equivalent plastic strain decreased by 20% or more compared to comparative example 1. In example 4 in which the conditions excluding the bead depth were the same as in example 1, the maximum value of the equivalent plastic strain decreased by 25% or more compared to comparative example 1. In example 4, the sum of the bead depths in each vertical wall is 6.7 times the sheet thickness of the top plate, which is greater than in example 1. Therefore, it has been confirmed that concentration of strain on the deformed portion of the rocker outer was mitigated at the time of a side collision with a pole, by providing at least one bead in the vertical walls such that the sum of the depths thereof is 4.0 times or more the sheet thickness. As the sum of the bead depths increases, the strain concentration is mitigated further. The sum of the depths of the beads in each vertical wall need only be 4.0 times or more the sheet thickness of the top plate, but preferably 5.0 times or more the sheet thickness of the top plate, and more preferably 6.0 times or more the sheet thickness of the top plate.

In example 6, only the vertical wall on the upper side of the vehicle body includes the bead. Comparing example 6 with example 2 in which the sum of the depths of the beads per vertical wall is the same, the maximum value of the equivalent plastic strain was substantially the same. Accordingly, it was confirmed that the effect of mitigating the strain concentration was also achieved when only one of the vertical walls included one or more beads. However, forming the beads in both vertical walls is preferable, considering the influence of deformation of the rocker outer on the ridge line portions on the upper and lower sides of the vehicle body.

In example 4, each vertical wall includes a bead recessed inward of the rocker outer. Meanwhile, in example 5, each vertical wall includes a bead protruding inward of the rocker outer. In both examples 4 and 5, the maximum value of the equivalent plastic strain decreased significantly compared to comparative example 1. Therefore, regardless of whether the bead protrudes or is recessed, the strain concentration in the deformed portion of the rocker outer can be mitigated. Note that the reduction in the maximum value of the equivalent plastic strain in example 5 compared to comparative example 1 was greater than in example 4. Therefore, to mitigate the strain concentration further, it is preferable that a vertical wall includes a bead protruding outward of the rocker outer.

Comparing examples 2 and 3, which differed only in whether the top plate had a bead, the maximum value of the equivalent plastic strain decreased more in example 3 in which the top plate had a bead. Therefore, to mitigate the strain concentration, it can be considered preferable that not only the vertical walls but also the top plate have a bead. The depth of the bead of the top plate is preferably 5.0 times or more the sheet thickness of the top plate, more preferably 6.0 times or more the sheet thickness of the top plate, and more preferably 7.5 times or more the sheet thickness of the top plate.

### REFERENCE SIGNS LIST

30, 30A, 30B: Rocker outer
31: Top plate
32, 33: Ridge line portion
34, 35: Vertical wall
36, 37: Flange
381: Bead (first bead)
382: Bead (second bead)
60: Blank
80, 80A: Die assembly
81, 81A: Punch
811: Punch body
812: Cushion
82: Die
83: Pad
100: Door ring structure

## Claims

1. A rocker outer for an automobile, comprising:
a top plate;
two vertical walls disposed on respective sides of the top plate and connected to the top plate via respective ridge line portions; and
flanges respectively connected to the two vertical walls, on a side opposite to the top plate side,
wherein the rocker outer is formed of a steel sheet having a tensile strength of 980 MPa or more,
at least one of the two vertical walls includes at least one first bead extending in a longitudinal direction of the rocker outer,
in a transverse cross-section of the rocker outer, the at least one first bead protrudes from a reference line inward or outward of the rocker outer, the reference line being a straight line connecting an end portion, on the top plate side, of the at least one of the two vertical walls and an end portion, on the flange side, of the at least one of the two vertical walls, and
a sum of a depth of the at least one first bead with respect to the reference line is 4.0 times or more a sheet thickness of the top plate.

2. The rocker outer according to claim 1,
wherein each of the two vertical walls includes the at least one first bead.

3. The rocker outer according to claim 1,
wherein the top plate includes a second bead having a shape recessed inward of the rocker outer and extending in the longitudinal direction.

4. The rocker outer according to claim 3,
wherein the second bead has a depth of 5.0 times or more the sheet thickness.

5. The rocker outer according to claim 3,
wherein, in a transverse cross-section of the rocker outer in a state where the two vertical walls are positioned above and below, the second bead has a bottom portion whose center is located below a center of the top plate.

6. A door ring structure for an automobile, comprising:
the rocker outer according to any one of claims 1 to 5.

7. A method for producing the door ring structure according to claim 6, the method comprising:
a preparation step of preparing a blank having an annular shape in a plan view;
a heating step of heating the blank to an austenite transformation finish temperature or higher; and
a forming step of forming the heated blank into the door ring structure using a die assembly, and performing quenching,
wherein the die assembly includes a punch, a die, and a pad,
a portion of the punch for forming the rocker outer includes: a punch body; and a cushion facing the pad and capable of being received within the punch body, and
in the forming step, a portion of the blank that is to be formed into the top plate is held between the pad and the cushion, and thereafter the blank is pressed by the punch body and the die while the blank is held between the pad and the cushion.

8. A method for producing the door ring structure according to claim 6, the method comprising:
a preparation step of preparing a blank having an annular shape in a plan view;
a heating step of heating the blank to an austenite transformation finish temperature or higher; and
a forming step of forming the heated blank into the door ring structure using a die assembly, and performing quenching,
wherein the die assembly includes a punch, a die, and a pad, and
in the forming step, a portion of the blank that is to be formed into the top plate is held between the pad and the punch, and the vertical walls and the flanges are formed by pressing the blank using the punch and the die.
